(19) **Europäisches Patentamt / European Patent Office / Office européen des brevets**

(11) **EP 2 894 603 A1**

(12) **EUROPEAN PATENT APPLICATION**

(43) Date of publication:
**15.07.2015 Bulletin 2015/29**

(51) Int Cl.:
***G06T 7/20*** (2006.01)

(21) Application number: **14198497.1**

(22) Date of filing: **17.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.01.2014 US 201414149991**

(71) Applicant: **Sstatzz Oy**
**00220 Helsinki (FI)**

(72) Inventors:
• **Kemppainen, Teemu**
**02110 Espoo (FI)**
• **Hohteri, Harri**
**00180 Helsinki (FI)**

(74) Representative: **Becker Kurig Straus**
**Patentanwälte**
**Bavariastrasse 7**
**80336 München (DE)**

(54) **Sports system and method**

(57)    A sports system for monitoring spatial positions of players within a spatial playing region is provided. The sports system includes personal monitors configured to be carried by the players, and a monitoring arrangement configured to be coupled in communication with the personal monitors for determining spatial positions of the personal monitors within the spatial playing region. The sports system also includes a camera arrangement for capturing views of at least a portion of the spatial playing region for determining spatial positions of the players within the spatial playing region, and a data merging arrangement for merging position-measurement data generated by the monitoring arrangement and the camera arrangement to provide output information indicative of the spatial positions of the players within the spatial playing region.

FIG. 1

Printed by Jouve, 75001 PARIS (FR)

**Description**

**TECHNICAL FIELD**

The present disclosure relates generally to player tracking; and more specifically, to sports system for monitoring spatial positions of players within a spatial playing region. Moreover, the present disclosure relates to methods of employing sports system for monitoring spatial positions of players within a spatial playing region. Furthermore, the present disclosure also relates to software products recorded on non-transient machine-readable data storage media, wherein the software products are executable upon computing hardware of the aforesaid sports system to implement the aforesaid methods.

**BACKGROUND**

In past few decades, player tracking has emerged as an area of interest. From a training or statistical analysis point of view, it is desirable to obtain detailed information about how players and/or a ball are moving during a game. Moreover, sports viewers are often interested in information about their favourite players, while viewing a live-telecast of the game.

Conventionally, various techniques have been employed to track players when they move within a spatial playing region. Some conventional techniques for tracking players use triangulation or trilateration to determine spatial positions of the players carrying wireless-enabled objects within the spatial playing region. These techniques identify the players accurately. However, they provide spatially inaccurate data, as their results often involve an error of a few meters.

Other convention techniques for tracking players employ multiple cameras for video detection of spatial positions of the players. These techniques determine the spatial positions of the players fairly accurately. However, these conventional techniques suffer from several disadvantages. Firstly, these techniques are unable to identify the players reliably at all times, as they use a global detector, such as a Histogram of Oriented Gradients (HOG) detector for identifying individual players. Secondly, these techniques are not fast enough to be able to cope with demands of identifying the players in a fast-paced team sport, where the players look very similar to each other. Thirdly, these techniques are complex and expensive.

Therefore, there exists a need for a sports system for monitoring accurate spatial positions of players within a spatial playing region in real-time.

**SUMMARY**

The present disclosure seeks to provide an improved sports system for monitoring one or more spatial positions of one or more players within a spatial playing region.

The present disclosure also seeks to provide an improved method of employing a sports system for monitoring one or more spatial positions of one or more players within a spatial playing region.

In one aspect, embodiments of the present disclosure provide a sports system for monitoring one or more spatial positions of one or more players within a spatial playing region. The sports system includes one or more personal monitors, a monitoring arrangement, a camera arrangement and a data merging arrangement.

The personal monitors are configured to be carried by the players, when the players move within the spatial playing region. The monitoring arrangement is coupled in communication with the personal monitors for determining one or more spatial positions of the personal monitors within the spatial playing region.

Beneficially, the monitoring arrangement is operable to employ wireless communication for sending and/or receiving signals to and/or from the personal monitors. Additionally, the monitoring arrangement is operable to employ, for position measurement within the spatial playing region, at least one of: triangulation measurement, trilateration measurement, Time-of-Flight (ToF) measurement, Received Signal Strength Indicator (RSSI) measurement, and/or Global Positioning System (GPS) measurement.

Moreover, the camera arrangement is operable to capture views of at least a portion of the spatial playing region for determining spatial positions of the players when moving within the spatial playing region. For this purpose, the camera arrangement is optionally operable to employ at least one of: one or more Pan-Tilt-Zoom (PTZ) cameras following movement of the players, and/or one or more stationary cameras imaging substantially a whole of the spatial playing region.

Moreover, the data merging arrangement is operable to merge position-measurement data generated by the monitoring arrangement and the camera arrangement to provide output information indicative of the spatial positions of the players within the spatial playing region. For this purpose, the data merging arrangement is optionally operable to employ at least one particle filter.

Moreover, the data merging arrangement is optionally operable to employ a model for the players based upon one or more probabilities of the players being within one or more corresponding spatial zones of the spatial playing region at any given time. These spatial zones are optionally moved within the model corresponding to one or more rates and/or one or more directions of spatial movements of the players within the spatial playing region.

Furthermore, the monitoring arrangement in combination with the personal monitors is optionally operable to enable the data merging arrangement to identify the spatial positions of the personal monitors and corresponding unique identities of the personal monitors. These corresponding unique identities identify the players carrying the personal monitors. On the other hand, the camera arrangement is optionally operable to enable the data merging arrangement to identify the spatial positions of the players but not their corresponding unique identities.

The monitoring arrangement provides less accurate measurements of the spatial positions, relative to the camera arrangement. However, the monitoring arrangement identifies the players more accurately, relative to the camera arrangement. Therefore, the output information, obtained by merging the position-measurement data generated by the monitoring arrangement and the camera arrangement, provides accurate spatial positions of the players within the spatial playing region.

Beneficially, the data merging arrangement is optionally arranged to operate in substantially real-time, and to receive the position-measurement data generated by the monitoring arrangement and the camera arrangement in substantially real-time. Consequently, the sports system is optionally operable to function in substantially real-time, with a measurement-update rate of at least 10 samples per second.

Beneficially, the sports system can be arranged to be used in association with at least one of: a basketball pitch, a handball pitch, a football pitch, an American football pitch, a hockey pitch, an ice hockey pitch, a tennis pitch, a cricket pitch, a cricket field, a volleyball pitch, a baseball field, a polo field, and/or a golf course.

In another aspect, embodiments of the present disclosure provide a method of employing the sports system for monitoring the spatial positions of the players within the spatial playing region.

In yet another aspect, embodiments of the present disclosure provide a software product recorded on non-transient machine-readable data storage media, wherein the software product is executable upon computing hardware of the sports system for implementing the aforementioned method. The different embodiments mentioned above in connection with the system also apply to the method and software product.

Embodiments of the present disclosure substantially eliminate, or at least partially address, the aforementioned problems in the prior art, and enable merging of position-measurement data originating from heterogeneous sources to provide accurate spatial positions of players within a spatial playing region in substantially real-time.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

**DESCRIPTION OF THE DRAWINGS**

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

Fig. 1 is a schematic illustration of an example playing scenario in which a sports system is implemented pursuant to the present disclosure;

Fig. 2 is a schematic illustration of the sports system, in accordance with an embodiment of the present disclosure;

Fig. 3 is a schematic illustration of various components in an example implementation of a personal monitor, in accordance with an embodiment of the present disclosure;

Fig. 4 is an illustration of an example of position measurements collected sparsely on a spatial playing region, in accordance with an embodiment of the present disclosure;

Figs. 5A, 5B, 5C and 5D are illustrations of an example implementation of a particle filter employed by a data merging arrangement, in accordance with an embodiment of the present disclosure; and

Fig. 6 is an illustration of steps of a method of employing the sports system for monitoring one or more spatial positions of one or more players within a spatial playing region, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

## DETAILED DESCRIPTION OF EMBODIMENTS

The following detailed description illustrates embodiments of the present disclosure and ways in which they can be implemented. Although the best mode of carrying out the present disclosure has been disclosed, those skilled in the art would recognize that other embodiments for carrying out or practicing the present disclosure are also possible.

Embodiments of the present disclosure provide a sports system for monitoring one or more spatial positions of one or more players within a spatial playing region. The sports system includes one or more personal monitors, a monitoring arrangement, a camera arrangement and a data merging arrangement.

The personal monitors are configured to be carried by the players, when the players move within the spatial playing region. The monitoring arrangement is configured to be coupled in communication with the personal monitors for determining one or more spatial positions of the personal monitors within the spatial playing region.

Beneficially, the monitoring arrangement is operable to employ wireless communication for sending and/or receiving signals to and/or from the personal monitors. Additionally, the monitoring arrangement is operable to employ, for position measurement within the spatial playing region, at least one of: triangulation measurement, trilateration measurement, Time-of-Flight (ToF) measurement, Received Signal Strength Indicator (RSSI) measurement, and/or Global Positioning System (GPS) measurement.

Moreover, the camera arrangement is operable to capture views of at least a portion of the spatial playing region for determining spatial positions of the players when moving within the spatial playing region. For this purpose, the camera arrangement is optionally operable to employ at least one of: one or more Pan-Tilt-Zoom (PTZ) cameras following movement of the players, and/or one or more stationary cameras imaging substantially a whole of the spatial playing region, and/or one or more cameras which can be moved (carried by camera men / moving equipment).

Moreover, the data merging arrangement is operable to merge position-measurement data generated by the monitoring arrangement and the camera arrangement to provide output information indicative of the spatial positions of the players within the spatial playing region. For this purpose, the data merging arrangement is optionally operable to employ at least one particle filter.

Moreover, the data merging arrangement is optionally operable to employ a model for the players based upon one or more probabilities of the players being within one or more corresponding spatial zones of the spatial playing region at any given time. These spatial zones are optionally moved or expanded or contracted within the model corresponding to one or more rates and/or one or more directions of spatial movements of the players within the spatial playing region.

Additionally, separate probabilities and/or spatial zones are optionally computed with respect to the position-measurement data generated by the monitoring arrangement and the camera arrangement. Accordingly, the monitoring arrangement in combination with the personal monitors is optionally operable to enable the data merging arrangement to identify the spatial positions of the personal monitors and corresponding unique identities of the personal monitors. These corresponding unique identities identify the players carrying the personal monitors. On the other hand, the camera arrangement is optionally operable to enable the data merging arrangement to identify the spatial positions of the players but not their corresponding unique identities.

The monitoring arrangement provides less accurate measurements of the spatial positions, relative to the camera arrangement. However, the monitoring arrangement identifies the players more accurately, relative to the camera arrangement. Therefore, the output information, obtained by merging the position-measurement data generated by the monitoring arrangement and the camera arrangement, provides accurate spatial positions of the players within the spatial playing region.

Beneficially, the data merging arrangement is optionally arranged to operate in substantially real-time, and to receive the position-measurement data generated by the monitoring arrangement and the camera arrangement in substantially real-time. Consequently, the sports system is optionally operable to function in substantially real-time, with a measurement-update rate of at least 10 samples per second.

Furthermore, embodiments of the present disclosure are suitable for sports such as basketball, handball, football, American football, hockey, ice hockey, tennis, cricket, volleyball, baseball, polo, and golf, but not limited thereto. Beneficially, the sports system can be arranged to be used in association with at least one of: a basketball pitch, a handball pitch, a football pitch, an American football pitch, a hockey pitch, an ice hockey pitch, a tennis pitch, a cricket pitch, a cricket field, a volleyball pitch, a baseball field, a polo field, and/or a golf course.

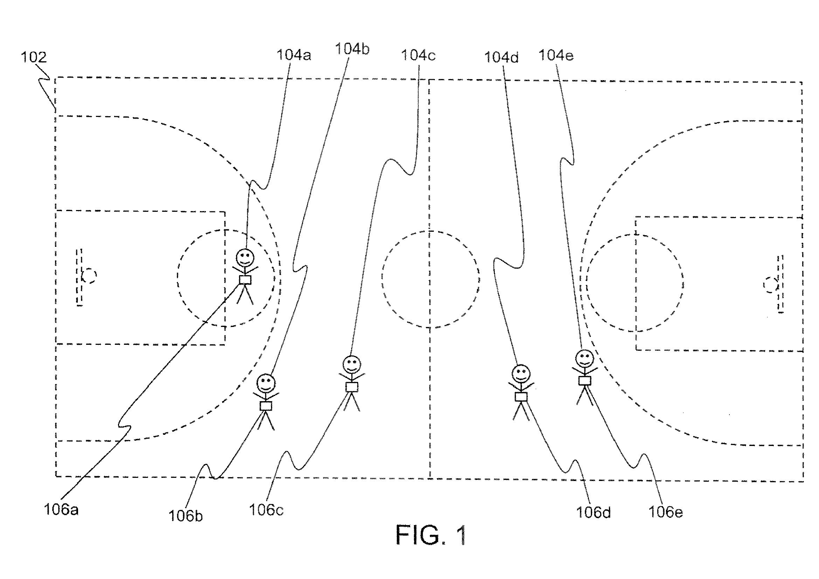

Referring now to the drawings, particularly by their reference numbers, Fig. 1 is a schematic illustration of an example playing scenario in which a sports system is implemented pursuant to the present disclosure. In Fig. 1, there is shown a spatial playing region **102,** and one or more players, depicted as a player **104a,** a player **104b,** a player **104c,** a player **104d** and a player **104e** (hereinafter collectively referred to as players **104).**

The players **104** play a game or perform practice in the spatial playing region **102.** In the example playing scenario, the spatial playing region **102** is a basketball pitch. It is to be noted here that the spatial playing region **102** can alternatively be any of: a handball pitch, a football pitch, an American football pitch, a hockey pitch, an ice hockey pitch, a tennis pitch, a cricket pitch, a cricket field, a volleyball pitch, a baseball field, a polo field, or a golf course.

The sports system includes one or more personal monitors, depicted as a personal monitor **106a,** a personal monitor **106b,** a personal monitor **106c,** a personal monitor **106d** and a personal monitor **106e** (hereinafter collectively referred to as personal monitors **106).** The players **104** carry their corresponding personal monitors **106,** for example, by wearing the personal monitors **106,** when they move within the spatial playing region **102.** With reference to Fig. 1, the players **104a, 104b, 104c, 104d, 104e** are carrying the personal monitors **106a, 106b, 106c, 106d, 106e** respectively. The players **104** may, for example, wear the personal monitors **106** by a detachable attachment to waist, wrist, ankle, or any other suitable part of their bodies.

In an example, the sports system may be implemented for use in a game of ice hockey, wherein the spatial playing region **102** may be an ice hockey pitch. Accordingly, the players **104** may be carrying and/or wearing one or more sports equipments, such as a hockey stick, hockey skates, a hockey helmet, protective gloves and various protective pads, during playing of the game. Beneficially, the personal monitors **106** may be implemented spatially within at least one of the sports equipments carried and/or worn by the players **104.**

Moreover, the sports system includes a monitoring arrangement (not shown in Fig. 1) coupled in communication with the personal monitors **106.** The monitoring arrangement is operable to determine one or more spatial positions of the personal monitors **106** within the spatial playing region **102.**

Moreover, the sports system also includes a camera arrangement (not shown in Fig. 1) for capturing views of at least a portion of the spatial playing region **102** for determining spatial positions of the players **104** when they move within the spatial playing region **102.**

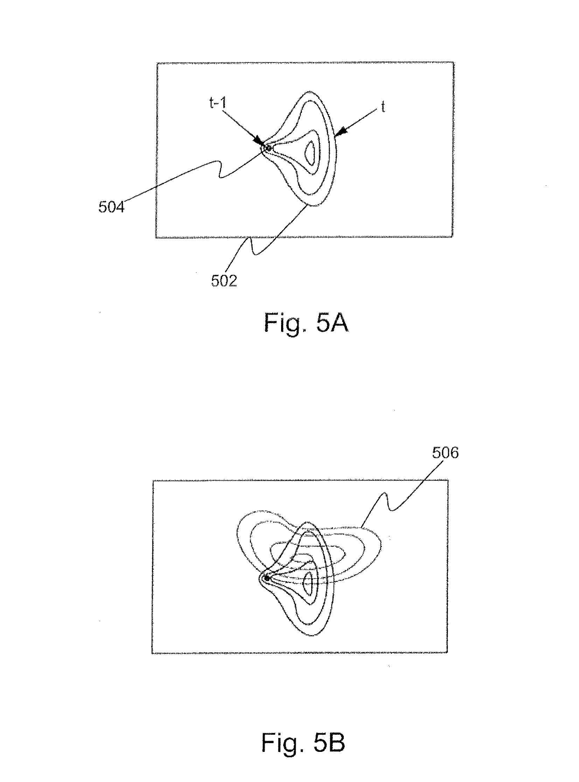

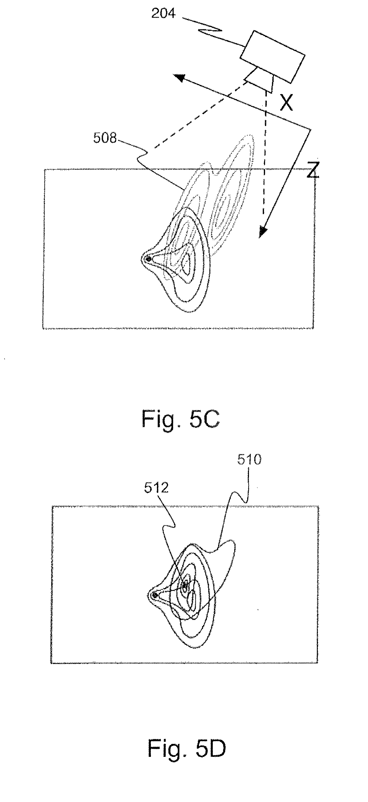

Furthermore, the sports system also includes a data merging arrangement (not shown in Fig. 1) for merging position-measurement data generated by the monitoring arrangement and the camera arrangement to provide output information indicative of accurate spatial positions of the players **104** within the spatial playing region **102.** For this purpose, the data merging arrangement is optionally operable to employ at least one particle filter. Implementation details of an example particle filter have been provided in conjunction with Figs. 5A, 5B, 5C and 5D.

Moreover, the monitoring arrangement in combination with the personal monitors **106** is optionally operable to enable the data merging arrangement to identify the spatial positions of the personal monitors **106** and corresponding unique identities of the personal monitors **106.** These corresponding unique identities identify the players **104** carrying the personal monitors **106.** On the other hand, the camera arrangement is optionally operable to enable the data merging arrangement to identify the spatial positions of the players **104** but not their corresponding unique identities.

The monitoring arrangement provides less accurate measurements of the spatial positions, relative to the camera arrangement. However, the monitoring arrangement identifies the players **104** more accurately, relative to the camera arrangement. Therefore, the output information, obtained by merging the position-measurement data generated by the monitoring arrangement and the camera arrangement, provides accurate spatial positions of the players **104** within the spatial playing region **102.**

Beneficially, the data merging arrangement is optionally arranged to operate in substantially real-time, and to receive the position-measurement data generated by the monitoring arrangement and the camera arrangement in substantially real-time.

Fig. 1 is merely an example, which should not unduly limit the scope of the claims herein. It is to be understood that the implementation of the sports system is provided as an example and is not limited to a specific number of players and personal monitors. A person skilled in the art will recognize many variations, alternatives, and modifications of embodiments of the present disclosure.

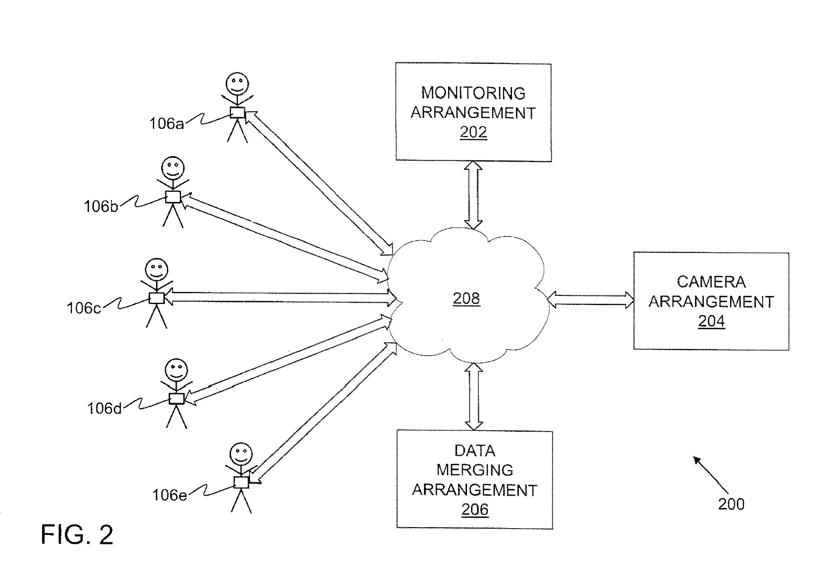

Fig. 2 is a schematic illustration of a sports system **200,** in accordance with an embodiment of the present disclosure. For illustration purposes only, the sports system **200** has been implemented in the spatial playing region **102.** The sports system **200** includes the personal monitors **106,** a monitoring arrangement **202,** a camera arrangement **204,** and a data merging arrangement **206.**

The monitoring arrangement **202** is coupled in communication with the personal monitors **106,** via a communication network **208.** Moreover, the monitoring arrangement **202** and the camera arrangement **204** communicate their respective position-measurement data to the data merging arrangement **206,** via the communication network **208.**

The communication network **208** can be a collection of individual networks, interconnected with each other and functioning as a single large network. Such individual networks may be wired, wireless, or a combination thereof. Examples of such individual networks include, but are not limited to, Local Area Networks (LANs), Wide Area Networks (WANs), Metropolitan Area Networks (MANs), Wireless LANs (WLANs), Wireless WANs (WWANs), Wireless MANs (WMANs), the Internet, second generation (2G) telecommunication networks, third generation (3G) telecommunication networks, fourth generation (4G) telecommunication networks, and Worldwide Interoperability for Microwave Access (WiMAX) networks.

Additionally or alternatively, the personal monitors **106** and the monitoring arrangement **202** may use their own "Bluetooth" network. ("Bluetooth" is a registered trademark).

In order to determine spatial positions of the personal monitors **106,** the monitoring arrangement **202** is beneficially operable to employ wireless communication for sending and/or receiving signals to and/or from the personal monitors **106.** Additionally, the monitoring arrangement **202** is optionally operable to employ, for position measurement within the spatial playing region **102,** at least one of: triangulation measurement, trilateration measurement, Time-of-Flight (ToF) measurement, Received Signal Strength Indicator (RSSI) measurement, and/or Global Positioning System (GPS) measurement.

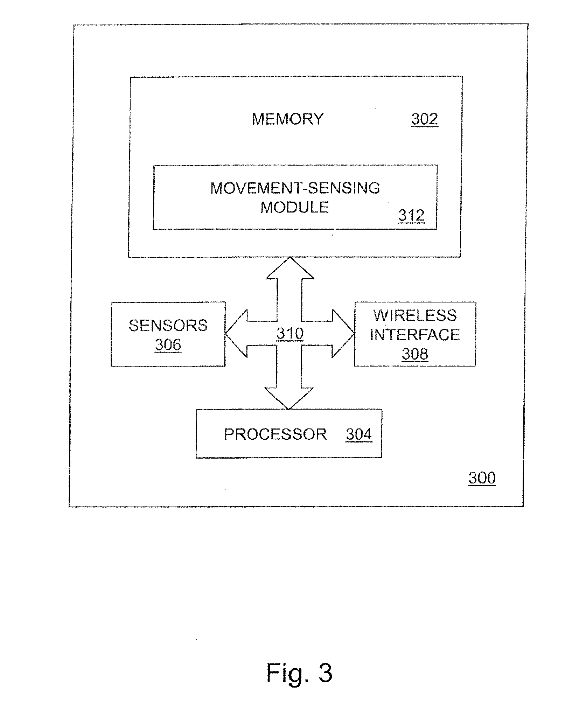

Additionally, each of the personal monitors **106** optionally includes a movement-sensing arrangement that is operable to generate movement data indicative of accelerations and/or rotations and/or orientations of that personal monitor. Details of the movement-sensing arrangement have been provided in conjunction with Fig. 3.

In an example, movement data corresponding to a particular personal monitor includes at least one of: a unique identity associated with that particular personal monitor, information pertaining to one or more movements (for example, accelerations and/or rotations and/or orientations) of that particular personal monitor, one or more spatial positions of that particular personal monitor, and/or associated time stamps.

Beneficially, the personal monitors **106** are optionally operable to communicate their corresponding movement data to the monitoring arrangement **202** via wireless communication links. Such wireless communication links may be either uni-directional or bi-directional.

Additionally, the personal monitors **106** may communicate their corresponding movement data to the monitoring arrangement **202** in a round-robin manner.

Subsequently, the monitoring arrangement **202** is optionally operable to use classical mechanics to analyze the movement data, and to integrate the movement data with the spatial positions of the personal monitors **106** to generate position-measurement data corresponding to the personal monitors **106.**

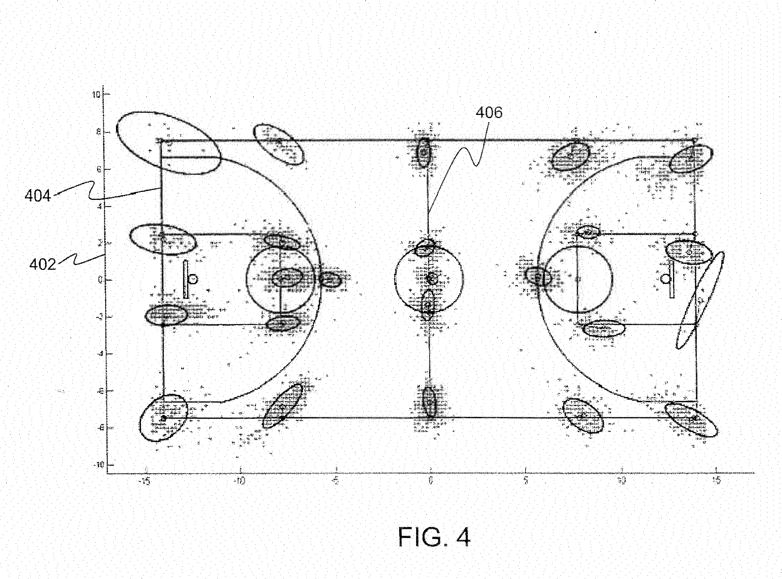

Moreover, the monitoring arrangement **202** is optionally operable to calibrate the position-measurement data on the spatial playing region **102.** Details of how the position-measurement data may be calibrated have been provided in conjunction with Fig. 4.

Moreover, the camera arrangement **204** is operable to capture views of at least a portion of the spatial playing region **102** for determining spatial positions of the players **104** when the players **104** move within the spatial playing region **102.** For this purpose, the camera arrangement **204** is optionally operable to employ at least one of: one or more Pan-Tilt-Zoom (PTZ) cameras following movement of the players **104,** and/or one or more stationary cameras imaging substantially a whole of the spatial playing region **102.**

Beneficially, the camera arrangement **204** is optionally operable to calibrate one or more cameras employed by the camera arrangement **204.** For this purpose, the camera arrangement **204** is optionally operable to project objects in the spatial playing region **102** onto a coordinate system of video frames captured by these cameras. These objects may, for example, include line crossings and corners on the spatial playing region **102** and/or the players **104** moving within the spatial playing region **102.**

Accordingly, the camera arrangement **204** is optionally operable to compute parameters, such as camera pose, corresponding to the cameras. For this purpose, the camera arrangement **204** is optionally operable to use computer vision to detect the spatial playing region **102,** namely, its boundaries, the line crossings and/or the corners. Additionally or alternatively, the camera arrangement **204** is optionally operable to employ inertial navigation using sensors, such as accelerometer and gyroscopic sensor, within these cameras to detect their corresponding camera poses.

For stationary cameras, these parameters may be computed only once. For moving cameras, the parameters may be computed repeatedly, for example, when these cameras pan, tilt, zoom or move.

In some examples, a single camera with a substantially wide angle view may be employed to capture aerial views of substantially the whole of the spatial playing region **102.** Beneficially, such aerial views potentially prevent player occlusion, and enable a substantially complete and accurate calibration of the camera.

As a result of the calibration, the camera arrangement **204** is optionally operable to convert position measurements within the video frames into position measurements within the spatial playing region **102.** Consequently, the camera arrangement **204** is operable to generate position-measurement data corresponding to the players **104.**

Furthermore, the data merging arrangement **206** is operable to merge the position-measurement data generated by the monitoring arrangement **202** and the camera arrangement **204** to provide output information indicative of accurate spatial positions of the players **104** within the spatial playing region **102**. For this purpose, the data merging arrangement **206** is optionally operable to employ at least one particle filter. Implementation details of an example particle filter have been provided in conjunction with Figs. 5A, 5B, 5C and 5D.

Additionally, the data merging arrangement **206** is optionally operable to take into account other sensor data including, for example, a status of a clock and/or a position of a ball during playing of the game.

Beneficially, the data merging arrangement **206** is optionally operable to employ a model for the players **104** based upon one or more probabilities of the players **104** being within one or more corresponding spatial zones of the spatial playing region **102** at any given time. These probabilities correspond to pre-defined state variables of the players **104**. These pre-defined state variables optionally include spatial positions of the players **104** and/or rates at which the players **104** spatially move within the spatial playing region **102**. The pre-defined state variables may be either user-defined or system-defined by default.

The model assumes that the players **104** exhibit Markov property. This means that a current state of a particular player is a function of an immediately-previous state and current measurements. Accordingly, the data merging arrangement **206** is optionally operable to take into account at least one of:

(a) the aforementioned movement data of the personal monitors **106** carried by the players **104** generated at a current time 't',
(b) spatial positions of the players **104** at a previous time 't-1', and/or
(c) a priori knowledge of individual roles of the player **104,** for example, such as point guard, shooting guard, small forward, power forward and centre, in a game of basketball.

These spatial zones are optionally moved or expanded or contracted within the model corresponding to one or more rates and/or one or more directions of spatial movements of the players **104** within the spatial playing region **102**. The rates and/or the directions are optionally computed from the aforementioned movement data by using classical mechanics.

Additionally, separate probabilities and/or spatial zones are optionally computed with respect to the position-measurement data generated by the monitoring arrangement **202** and the camera arrangement **204.** Optionally, these probabilities can be approximated to identify the spatial zones within which the players **104** are most likely to be found.

Accordingly, the monitoring arrangement **202** in combination with the personal monitors **106** is optionally operable to enable the data merging arrangement **206** to identify the spatial positions of the personal monitors **106** and corresponding unique identities of the personal monitors **106**. These corresponding unique identities identity the players **104** carrying the personal monitors **106**. On the other hand, the camera arrangement **204** is optionally operable to enable the data merging arrangement **206** to identify the spatial positions of the players **104** but not their corresponding unique identities.

The monitoring arrangement **202** provides less accurate measurements of the spatial positions, relative to the camera arrangement **204**. However, the monitoring arrangement **202** identifies the players **104** more accurately, relative to the camera arrangement **204**. Therefore, the output information, obtained by merging the position-measurement data generated by the monitoring arrangement **202** and the camera arrangement **204,** provides accurate spatial positions of the players **104** within the spatial playing region **102**. Details of how the output information can be obtained have been provided in conjunction with Figs. 5A, 5B, 5C and 5D.

Furthermore, the output information so obtained may then be used for various purposes, for example, including mapping position coordinates of the players **104** to the coordinate system of the video frames captured by the camera arrangement **204,** and visualizing as graphics on top of the video frames. The video frames along with the visualized graphics may then be streamed to devices of sports viewers and/or coaches substantially in real-time. Examples of such devices include, but are not limited to, mobile phones, smart telephones, Mobile Internet Devices (MIDs), tablet computers, Ultra-Mobile Personal Computers (UMPCs), phablet computers, Personal Digital Assistants (PDAs), web pads, Personal Computers (PCs), handheld PCs, laptop computers, desktop computers, large-sized touch screens with embedded PCs, and interactive entertainment devices, such as game consoles, video players, Television (TV) sets and Set-Top Boxes (STBs).

Beneficially, the data merging arrangement **206** is optionally arranged to operate in substantially real-time, and to receive the position-measurement data generated by the monitoring arrangement **202** and the camera arrangement **204** in substantially real-time. Consequently, the sports system **200** is optionally operable to function in substantially real-time, with a measurement-update rate of at least 10 samples per second.

Alternatively, the data merging arrangement **206** may be arranged to operate periodically or randomly.

In some examples, the sports system **200** may include one or more databases (not shown in Fig. 2), whereat the data merging arrangement **206** may store the output information indicative of accurate spatial positions of the players **104** within the spatial playing region **102**.

In some examples, the data merging arrangement **206** may be coupled in communication with a remote server (not shown in Fig. 2) that may be operable to collect statistical data indicative of movements and/or spatial positions of the players **104** as a function of time. The remote server may, for example, be operable to further analyze the statistical data to provide feedback on the performance of the players **104.**

Beneficially, the data merging arrangement **206** may be implemented using a computing device that includes computing hardware, which is operable to execute one or more software products recorded on non-transient machine-readable data storage media. Typical examples of the computing device include, but are not limited to, a mobile phone, a smart telephone, an MID, a tablet computer, a UMPC, a phablet computer, a PDA, a web pad, a PC, a handheld PC, a laptop computer, a desktop computer, a large-sized touch screen with an embedded PC, and a server.

Furthermore, the sports system **200** is suitable for implementation in sports such as basketball, handball, football, American football, hockey, ice hockey, tennis, cricket, volleyball, baseball, polo, and golf, but not limited thereto. Beneficially, the sports system **200** can be arranged to be used in association with at least one of: a basketball pitch, a handball pitch, a football pitch, an American football pitch, a hockey pitch, an ice hockey pitch, a tennis pitch, a cricket pitch, a cricket field, a volleyball pitch, a baseball field, a polo field, and/or a golf course.

It should be noted here that the sports system **200** is not limited to a specific number of personal monitors, monitoring arrangements, cameras, camera arrangements, and data merging arrangements. Fig. 2 is merely an example, which should not unduly limit the scope of the claims herein. A person skilled in the art will recognize many variations, alternatives, and modifications of embodiments of the present disclosure. For example, the sports system **200** can be implemented for monitoring objects and/or people in other environments, such as a super market, a stadium, and so on.

Fig. 3 is a schematic illustration of various components in an example implementation of a personal monitor **300,** in accordance with an embodiment of the present disclosure. The personal monitor **300** could be implemented as the personal monitors **106.** The personal monitor **300** includes, but is not limited to, a data memory **302,** a processor **304,** a configuration of sensors **306,** a wireless interface **308,** and a system bus **310** that operatively couples various components including the data memory **302,** the processor **304,** the sensors **306** and the wireless interface **308.** The data memory **302** optionally stores a movement-sensing module **312.**

The personal monitor **300** also includes a power source (not shown in Fig. 3) for supplying electrical power to various components of the personal monitor **300.** The power source may, for example, be a battery or other suitable power storage means.

The sensors **306** optionally include at least one of: accelerometer, magnetometer, pressure sensor, temperature sensor, gyroscopic sensor, GPS receiver, proximity sensor, Bluetooth beacon, or timer. Outputs generated by the sensors **306** may, for example, be indicative of accelerations and/or rotations and/or orientations of the personal monitor **300** as a function of time.

Beneficially, the movement-sensing module **312** is optionally interfaced with the sensors **306.** The sensors **306** and the movement-sensing module **312** form a part of a movement-sensing arrangement of the personal monitor **300.**

When executed on the processor **304,** the movement-sensing module **312** is operable to resolve and integrate the outputs generated by the sensors **306** into movement data corresponding to the personal monitor **300.**

As described earlier, the movement data may include at least one of: a unique identity associated with the personal monitor **300,** information pertaining to one or more movements (for example, accelerations and/or rotations and/or orientations) of the personal monitor **300,** one or more spatial positions of the personal monitor **300,** and/or associated time stamps. The unique identity may, for example, be a Media Access Control (MAC) address, a Terminal Identifier (TID), or other identification pertaining to the personal monitor **300.**

The sensors **306** optionally include a GPS receiver for determining one or more absolute spatial positions of the personal monitor **300** upon a surface of the Earth.

The sensors **306** optionally include a proximity sensor for sensing presence of other personal monitors in a proximity of the personal monitor **300.** Consequently, the proximity sensor detects presence of other players carrying the other personal monitors in the proximity of a player carrying the personal monitor **300.**

The sensors **306** optionally include a timer for including the time stamps in the movement data. Alternatively, the processor **304** may provide system time as reference for including the time stamps in the movement data.

Moreover, the personal monitor **300** is optionally operable to communicate the movement data to the monitoring arrangement **202** using the wireless interface **308.** As described earlier, the monitoring arrangement **202** is optionally operable to analyze the movement data, and to integrate the movement data with spatial positions of the personal monitor **300** to generate position-measurement data corresponding to the personal monitor **300.**

Optionally, the wireless interface **308** may be used to upload new configuration and/or software updates to the personal monitor **300,** as and when required.

Fig. 3 is merely an example, which should not unduly limit the scope of the claims herein. It is to be understood that the specific designation for the personal monitor **300** is provided as an example and is not to be construed as limiting the personal monitor **300** to specific numbers, types, or arrangements of modules and/or components of the personal monitor **300.** A person skilled in the art will recognize many variations, alternatives, and modifications of embodiments of the present disclosure. For example, a personal monitor similar to the personal monitor **300** may be embedded within a ball with which the players **104** play a game. Accordingly, sensor data from the personal monitor may be used to identify which player held the ball at any given time.

Furthermore, in order to calibrate the position-measurement data, the monitoring arrangement **202** is optionally operable to collect position measurements from known points within the spatial playing region **102** over a period of time. Subsequently, the monitoring arrangement **202** is optionally operable to compute and analyze statistics of the collected position measurements to correct measurement-biased errors. Such measurement-biased errors may result from reflections of signals, for example, from nearby walls or other objects.

The position-measurement data so calibrated is beneficially more reliable, and is beneficially used to estimate the probabilities of the players **104** being within one or more corresponding spatial zones of the spatial playing region **102** at any given time. Details of how these probabilities are estimated have been provided in conjunction with Figs. 5A, 5B, 5C and 5D.

In an example, the position measurements may be collected for a dense grid defined on the spatial playing region **102**. In another example, the position measurements may be collected sparsely for certain points, such as the line crossings and the corners on the spatial playing region **102**.

Fig. 4 is an illustration of an example of position measurements collected sparsely on the spatial playing region **102**, in accordance with an embodiment of the present disclosure. In Fig. 4, a scale **402** represents a coordinate system used to calibrate the position-measurement data on the spatial playing region **102**. An origin (0,0) of this coordinate system is at a centre of the spatial playing region **102**, namely, a centre of a centre circle of the basketball pitch.

With reference to Fig. 4, points on a line **404** are prone to larger measurement-biased errors relative to points on a line **406**. This may have resulted from reflections of signals from one or more walls or other structures located in a proximity of the line **404** on the spatial playing region **102**.

When the monitoring arrangement **202** generates position-measurement data corresponding to a particular point on the spatial playing region **102**, the monitoring arrangement **202** optionally corrects measurement-biased errors corresponding to that particular point. If the measurement-biased errors for that particular point are not known, the monitoring arrangement **202** optionally uses interpolation of three or more known points that are located in a proximity of that particular point.

Fig. 4 is merely an example, which should not unduly limit the scope of the claims herein. A person skilled in the art will recognize many variations, alternatives, and modifications of embodiments of the present disclosure.

Figs. 5A, 5B, 5C and 5D are illustrations of an example implementation of a particle filter employed by the data merging arrangement **206**, in accordance with an embodiment of the present disclosure. For illustration purposes only, the particle filter has been implemented for a single player. The particle filter can be implemented for each of the players **104** in a similar manner.

Fig. 5A shows a probability distribution **502** of possible spatial positions of the player after time evolution, for example, from the time 't-1' to the time 't'. The probability distribution **502** is beneficially determined based on the model employed by the data merging arrangement **206**. Additionally, utilization of time evolution limits search space, and therefore, significantly reduces computations.

With reference to Fig. 5A, a dot **504** represents an actual spatial position of the player at the time 't-1'.

Fig. 5B shows a probability distribution **506** corresponding to the position-measurement data generated by the monitoring arrangement **202** at the time 't'.

Fig. 5C shows a probability distribution **508** corresponding to the position-measurement data generated by the camera arrangement **204** at the time 't'.

It is evident that the probability distribution **508** is multi-modal, due to an anonymous nature of the position-measurement data generated by the camera arrangement **204**. Such multi-modal distributions are often obtained, when multiple players are spatially positioned in a proximity of each other. However, such multi-modal distributions do not lead to inaccurate results, as the output information is obtained by merging the probability distributions **502, 506** and **508** together.

For clarification in Fig. 5C is shown the camera arrangement **204** with Z-axis and X-axis relative to the camera arrangement **204**. The Z-axis refers to distance away from camera in the direction of the camera view. X-axis refers to position of objects in relation to the camera view in left-right direction. (Additionally Y-axis could be added to refer position of the objects in up-down direction is respect to the camera view). Further the probability distribution **508** form factor is oval indicating that the camera arrangement **204** can typically used to provide more precise position measurement data in relation to X-axis than to Z-axis. In practice position precision from camera arrangement might be less accurate in relation to monitoring arrangement **202** in certain directions (such as Z-axis direction) but more accurate in relation to other direction (such as X-axis or Y-axis direction).

Fig. 5D shows a probability distribution **510** obtained by merging the probability distributions **506** and **508** together.

With reference to Fig. 5D, a dot **512** represents an accurate spatial position of the player at the time 't'. The dot **512** is obtained by merging the probability distributions **502, 506** and **508** together.

Figs. 5A, 5B, 5C and 5D are merely examples, which should not unduly limit the scope of the claims herein. A person skilled in the art will recognize many variations, alternatives, and modifications of embodiments of the present disclosure.

It is to be noted here that the probability distributions **502, 506, 508 and 510** can be shown in any suitable coordinate system, such as the coordinate system represented by the scale **402** in Fig. 4, and/or the coordinate system of the video frames captured by the camera arrangement **204.**

In some examples, the probability distributions **502** and **506** can be drawn in the coordinate system represented by the scale **402** first. Thereafter, the probability distributions **502** and **506** can be weighted and combined together to produce a resulting probability distribution, which can be projected onto the coordinate system of the video frames. Subsequently, the resulting probability distribution and the probability distribution **508** can be weighted and combined together to obtain a final probability distribution.

In some examples, a Kalman filter or an extended Kalman filter or an unscented Kalman filter (hereinafter collectively referred to as Kalman filters) can be employed, instead of the particle filter. However, these Kalman filters require probability distributions to be unimodal, namely, Gaussian. Therefore, the Kalman filters cannot be used with multi-modal distributions, such as the probability distribution **508** shown in Fig. 5C.

Moreover, the particle filter can be used advantageously for non-parametric and multi-modal distributions with non-linear measurements, as illustrated in Figs. 5A, 5B, 5C and 5D.

As the player exhibits Markov property, a probability distribution of a state of the player may be estimated recursively by using a Bayesian recursion equation (1) and a Chapman-Kolmogorov equation (2) as illustrated below:

$$(1)$$

$$Pr(w_t|x_{1\ldots t}) = \frac{Pr(x_t|w_t)\,Pr(w_t|x_{1\ldots t-1})}{\int Pr(x_t|w_t)\,Pr(w_t|x_{1\ldots t-1})\,dw_t}$$

$$(2)$$

$$Pr(w_t|x_{1\ldots t-1}) = \int Pr(w_t|w_{t-1})\,Pr(w_{t-1}|x_{1\ldots t-1})\,dw_{t-1}$$

, where '$w_t$' represents the state of the player at the time 't', and
'$x_{1\ldots t}$' represents measurements of a state variable, namely, spatial position of the player, taken till the time 't'.

Additionally, the state of the player '$w_t$' may be represented as:

$$\begin{bmatrix} x_t \\ y_t \\ \dot{x}_t \\ \dot{y}_t \end{bmatrix}$$

, where '$x_t$' and '$y_t$' represent position coordinates of the player, and
'$\dot{x}_t$' and '$\dot{y}_t$' represent velocity of the player.

Moreover, the particle filter optionally approximates the probability distribution by using an equation (3) that uses weighted particles as illustrated below:

(3)

$$\Pr(wt\text{-}1|x1\ldots t\text{-}1)=\sum_{i} ai\left(\left[\,wt\text{-}1 - \hat{w}^{[i]}_{t-1}\right]\right) \quad,$$

, where 'a$_i$' represents weights that sum to unity.

Approximating the probability distribution significantly reduces unnecessary computations, as the approximated probability distribution identifies one or more spatial zones within which the player is most likely to be found. Therefore, computation of full probability distributions may not be required.

Equations (1), (2) and (3) are merely examples, which should not unduly limit the scope of the claims herein. A person skilled in the art will recognize many variations, alternatives, and modifications of embodiments of the present disclosure.

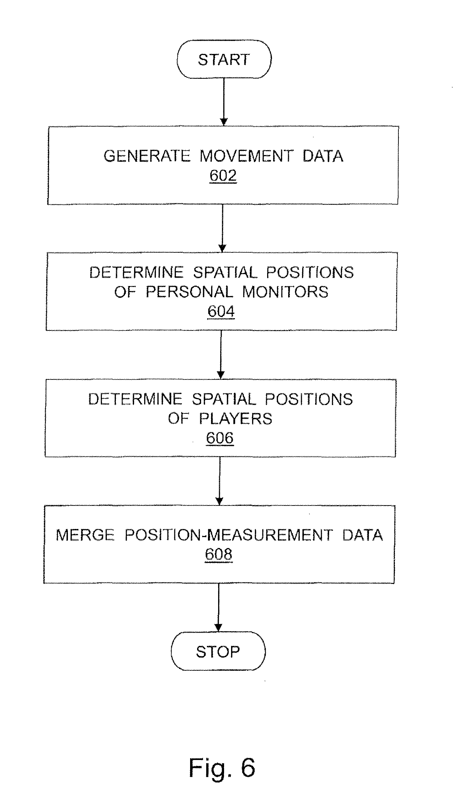

Fig. 6 is an illustration of steps of a method of employing the sports system **200** for monitoring the spatial positions of the players **104** within the spatial playing region **102,** in accordance with an embodiment of the present disclosure. The method is depicted as a collection of steps in a logical flow diagram, which represents a sequence of steps that can be implemented in hardware, software, or a combination thereof.

At a step **602,** the personal monitors **106** generate their corresponding movement data, and communicate the movement data to the monitoring arrangement **202,** as described earlier.

At a step **604,** the monitoring arrangement **202** determines the spatial positions of the personal monitors **106** within the spatial playing region **102,** and generates corresponding position-measurement data, as described earlier.

The step **604** optionally includes a sub-step at which the monitoring arrangement **202** calibrates the position-measurement data, as described earlier.

At a step **606,** the camera arrangement **204** determines the spatial positions of the players **104** when they move within the spatial playing region **102,** and generates corresponding position-measurement data, as described earlier.

The step **606** optionally includes a sub-step at which the camera arrangement **204** calibrates the cameras employed at the step **606,** as described earlier.

Beneficially, the steps **602, 604** and **606** may be performed simultaneously.

The method optionally includes a step at which the data merging arrangement **206** is arranged to employ the model for the players **104,** as described earlier.

Next, at a step **608,** the data merging arrangement **206** merges the position-measurement data generated at the steps **604** and **606,** to provide the output information indicative of accurate spatial positions of the players **104** within the spatial playing region **102.**

The step **608** employs at least one particle filter, as described in conjunction with Figs. 5A, 5B, 5C and 5D.

Beneficially, the step **608** can be performed separately for each of the players **104** using parallel computing.

The steps **602, 604, 606** and **608** can be beneficially performed in substantially real-time. This enables the sports system **200** to function in substantially real-time, with the measurement-update rate of at least 10 samples per second.

The steps **602** to **608** are only illustrative and other alternatives can also be provided where one or more steps are added, one or more steps are removed, or one or more steps are provided in a different sequence without departing from the scope of the claims herein.

Embodiments of the present disclosure provide a computer program or software product recorded on non-transient machine-readable data storage media, wherein the computer program product is executable upon computing hardware or processor of the sports system **200** for implementing the method as generally described herein and in conjunction with Fig. 6. The computing hardware is generally configured to execute machine readable instructions of the computer program product. The computing hardware can comprise at least one memory device and at least one processor or processing device,

Embodiments of the present disclosure are susceptible to being used for various purposes, including, though not limited to, enabling merging of position-measurement data originating from heterogeneous sources to provide accurate spatial positions of players within a spatial playing region in substantially real-time, without a need to compute full probability distributions over a whole of the spatial playing region; and enabling graphical visualization of the players on top of video frames for streaming to sports viewers and coaches substantially in real-time.

Modifications to embodiments of the present disclosure described in the foregoing are possible without departing from the scope of the present disclosure as defined by the accompanying claims. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

**Claims**

1. A sports system for monitoring one or more spatial positions of one or more players (104a, 104b, 104c, 104d, 104e) within a spatial playing region (102), wherein the sports system includes:

   one or more personal monitors (106a, 106b, 106c, 106d, 106e) that are configured to be carried by the one or more players when moving within the spatial playing region (102);
   a monitoring arrangement (202) configured to be coupled in communication with the one or more personal monitors for determining one or more spatial positions of the one or more personal monitors within the spatial playing region (102) ;
   a camera arrangement (204) for capturing views of at least a portion of the spatial playing region (102) for determining spatial positions of the one or more players when moving within the spatial playing region (102); and
   a data merging arrangement (206) for merging position-measurement data generated by the monitoring arrangement (202) and the camera arrangement (204) to provide output information indicative of the one or more spatial positions of the one or more players within the spatial playing region (102).

2. The sports system as claimed in claim 1, wherein the monitoring arrangement (202) is configured to employ wireless communication for sending and/or receiving signals to and/or from the one or more personal monitors (106a, 106b, 106c, 106d, 106e), and to employ, for position measurement within the spatial playing region (102), at least one of: triangulation measurement, trilateration measurement, Time-of-Flight (ToF) measurement, Received Signal Strength Indicator (RSSI) measurement, Global Positioning System (GPS) measurement.

3. The sports system as claimed in claim 1 or 2, wherein the data merging arrangement (206) is configured to operate in substantially real-time and to receive the position-measurement data generated by the monitoring arrangement (202) and the camera arrangement (204) in substantially real-time.

4. The sports system as claimed in any of the preceding claims, wherein the data merging arrangement (206) is configured to employ a model for the one or more players based upon one or more probabilities (502, 506, 508) of the one or more players being within one or more corresponding spatial zones of the spatial playing region (102) at any given time, wherein the one or more spatial zones are moved within the model corresponding to one or more rates and/or one or more directions of spatial movements of the one or more players (104a, 104b, 104c, 104d, 104e) within the spatial playing region (102).

5. The sports system as claimed in any of the preceding claims, wherein the data merging arrangement (206) is configured to employ at least one particle filter for merging the position-measurement data generated by the monitoring arrangement (202) and the camera arrangement (204) to provide the output information indicative of the one or more spatial positions of the one or more players (104a, 104b, 104c, 104d, 104e) within the spatial playing region (102).

6. The sports system as claimed in any of the preceding claims, wherein the monitoring arrangement (202) in combination with the one or more personal monitors (106a, 106b, 106c, 106d, 106e) is configured to enable the data merging arrangement (206) to identify the one or more spatial positions (512) of the one or more personal monitors and corresponding unique identities of the one or more personal monitors whereby the corresponding unique identities identify the one or more players (104a, 104b, 104c, 104d, 104e) carrying the one or more personal monitors and the camera arrangement (204) is configured to enable the data merging arrangement (202) to identify the spatial positions (512) of the one or more players but not their corresponding unique identities, wherein the monitoring arrangement (202) provides less accurate measurements of spatial positions relative to the camera arrangement (204).

7. The sports system as claimed in any of the preceding claims, wherein the sports system is configured to function in substantially real-time, with a measurement-update rate of at least 10 samples per second.

8. The sports system as claimed in any of the preceding claims, wherein the camera arrangement (204) is configured to employ at least one of: one or more Pan-Tilt-Zoom (PTZ) cameras following movement of the one or more players (104a, 104b, 104c, 104d, 104e) one or more stationary cameras (204) imaging substantially a whole of the spatial playing region (102).

9. The sports system as claimed in any of the preceding claims, wherein the sports system is arranged to be used in association with at least one of: a basketball pitch, a handball pitch, a football pitch, an American football pitch, a hockey pitch, an ice hockey pitch, a tennis pitch, a cricket pitch, a cricket field, a volleyball pitch, a baseball field, a polo field, a golf course.

10. A method of employing a sports system for monitoring one or more spatial positions of one or more players (104a, 104b, 104c, 104d, 104e) within a spatial playing region (102), wherein the sports system includes one or more personal monitors (106a, 106b, 106c, 106d, 106e) configured to be carried by the one or more players when moving within the spatial playing region (102), and a monitoring arrangement (202) coupled in communication with the one or more personal monitors for determining one or more spatial positions of the one or more personal monitors within the spatial playing region (102), wherein the method includes:

using a camera arrangement (204) of the sports system for capturing views of at least a portion of the spatial playing region for determining spatial positions of the one or more players when moving within the spatial playing region; and
using a data merging arrangement (206) of the sports system for merging position-measurement data generated by the monitoring arrangement (202) and the camera arrangement (204) to provide output information indicative of the one or more spatial positions of the one or more players within the spatial playing region.

11. The method as claimed in claim 10, wherein the method includes:

arranging for the monitoring arrangement (202) to employ wireless communication for sending and/or receiving signals to and/or from the one or more personal monitors (106a, 106b, 106c, 106d, 106e); and
arranging for the monitoring arrangement (202) to employ, for position measurement within the spatial playing region, at least one of: triangulation measurement, trilateration measurement, Time-of-Flight (Tor) measurement, Received Signal Strength Indicator (RSSI) measurement, Global Positioning System (GPS) measurement.

12. The method as claimed in claim 10 or 11, wherein the method includes arranging for the data merging arrangement (206) to operate in substantially real-time and to receive the position-measurement data generated by the monitoring arrangement (202) and the camera arrangement (204) in substantially real-time.

13. The method as claimed in any of the claims 10-12, wherein the method includes arranging for the data merging arrangement (206) to employ a model for the one or more players (104a, 104b, 104c, 104d, 104e) based upon one or more probabilities (502, 506, 508) of the one or more players being within one or more corresponding spatial zones of the spatial playing region at any given time, wherein the one or more spatial zones are moved within the model corresponding to one or more rates and/or one or more directions of spatial movements of the one or more players within the spatial playing region and/or arranging for the data merging arrangement (206) to employ at least one particle filter for merging the position-measurement data generated by the monitoring arrangement (202) and the camera arrangement (204) to provide the output information indicative of the one or more spatial positions of the one or more players within the spatial playing region.

14. The method as claimed in any of the claims 10-13, wherein the method includes:

using the monitoring arrangement (202) in combination with the one or more personal monitors to enable the data merging arrangement (206) to identify the one or more spatial positions of the one or more personal monitors (106a, 106b, 106c, 106d, 106e) and corresponding unique identities of the one or more personal monitors, whereby the corresponding unique identities identify the one or more players (104a, 104b, 104c, 104d, 104e) carrying the one or more personal monitors: and
using the camera arrangement (204) to enable the data merging arrangement to identify the spatial positions of the one or more players but not their corresponding unique identities,
wherein the monitoring arrangement (202) provides less accurate measurements of spatial positions relative to the camera arrangement (204).

15. A computer program product recorded on non-transient machine-readable data storage media, wherein the computer program product is executable upon a computing hardware for implementing the method as claimed in any of the claims 10-14.

FIG. 1

FIG. 2

EP 2 894 603 A1

MEMORY 302

MOVEMENT-SENSING
MODULE 312

SENSORS
306

310

WIRELESS
INTERFACE
308

PROCESSOR 304

300

Fig. 3

FIG. 4

Fig. 5A

Fig. 5B

204

508

X

Z

Fig. 5C

510

512

Fig. 5D

START

GENERATE MOVEMENT DATA
602

DETERMINE SPATIAL POSITIONS
OF PERSONAL MONITORS
604

DETERMINE SPATIAL POSITIONS
OF PLAYERS
606

MERGE POSITION-MEASUREMENT DATA
608

STOP

Fig. 6

Europäisches
Patentamt

European
Patent Office

Office européen
des brevets

## EUROPEAN SEARCH REPORT

Application Number

EP 14 19 8497

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | EP 2 150 057 A2 (CURRY GERALD [US])<br>3 February 2010 (2010-02-03)<br>* abstract *<br>* paragraphs [0003], [0010], [0058], [0066], [0057], [0131] - [0132], [0141], [0262] *<br>* figures 4,8,28 * | 1-5, 7-13,15<br><br>6,14 | INV.<br>G06T7/20 |
| X<br><br><br><br><br><br>Y | ROLAND LESER ET AL: "Local Positioning Systems in (Game) Sports",<br>SENSORS,<br>vol. 11, no. 12,<br>1 January 2011 (2011-01-01), pages 9778-9797, XP055173583,<br>ISSN: 1424-8220, DOI: 10.3390/s111009778<br>* abstract *<br>* section 3 * | 1,5,6, 10,13-15<br><br><br><br><br>6,14 | |
| X<br><br><br><br><br><br><br>Y | ROK MANDELJC ET AL: "Tracking by Identification Using Computer Vision and Radio",<br>SENSORS,<br>vol. 13, no. 1,<br>24 December 2012 (2012-12-24), pages 241-273, XP055173579,<br>ISSN: 1424-8220, DOI: 10.3390/s130100241<br>* abstract *<br>* page 242, paragraph 2 - page 243, paragraph 2 *<br>* sections 3.1, 3.2, 4 * | 1,6,10, 14,15<br><br><br><br><br><br>6,14 | TECHNICAL FIELDS SEARCHED (IPC)<br><br>G06T<br>G06K<br>H04N<br>G01S<br>A63F |
| A | US 2011/242326 A1 (ESSA IRFAN AZIZ [US] ET AL) 6 October 2011 (2011-10-06)<br>* abstract *<br>* figures 1,6,7 *<br>* paragraphs [0002], [0003], [0049] - [0061] * | 4,13 | |

-/--

The present search report has been drawn up for all claims

| Place of search | Date of completion of the search | Examiner |
|---|---|---|
| Munich | 10 April 2015 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 14 19 8497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CATARINA B SANTIAGO ET AL: "Survey on team tracking techniques applied to sports", AUTONOMOUS AND INTELLIGENT SYSTEMS (AIS), 2010 INTERNATIONAL CONFERENCE ON, IEEE, PISCATAWAY, NJ, USA, 21 June 2010 (2010-06-21), pages 1-6, XP031731378, ISBN: 978-1-4244-7104-1 * the whole document * | 1-15 | |

-----

TECHNICAL FIELDS
SEARCHED      (IPC)

The present search report has been drawn up for all claims

| Place of search | Date of completion of the search | Examiner |
|---|---|---|
| Munich | 10 April 2015 | Scholz, Volker |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 2 894 603 A1

**ANNEX TO THE EUROPEAN SEARCH REPORT
ON EUROPEAN PATENT APPLICATION NO.**                    EP 14 19 8497

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2015

| Patent document cited in search report | | Publication date | Patent family member(s) | | Publication date |
|---|---|---|---|---|---|
| EP 2150057 | A2 | 03-02-2010 | EP | 2150057 A2 | 03-02-2010 |
| | | | US | 2010026809 A1 | 04-02-2010 |
| US 2011242326 | A1 | 06-10-2011 | NONE | | |

EPO FORM P0459

For more details about this annex : see Official Journal of the European Patent Office, No. 12/82

23